(19)

Europäisches
Patentamt

European
Patent Office

Office européen
des brevets

(11)  **EP 4 768 101 A1**

(12)  **EUROPEAN PATENT APPLICATION**

(43) Date of publication:
     **01.07.2026  Bulletin 2026/27**

(21) Application number: **25203036.6**

(22) Date of filing: **18.09.2025**

(51) International Patent Classification (IPC):
     **A63F 13/211** *(2014.01)*     **A63F 13/67** *(2014.01)*
     **A63F 13/212** *(2014.01)*     **A63F 13/428** *(2014.01)*

(52) Cooperative Patent Classification (CPC):
     **A63F 13/211; A63F 13/212; A63F 13/428;**
     **A63F 13/67**

(84) Designated Contracting States:
     **AL AT BE BG CH CY CZ DE DK EE ES FI FR GB**
     **GR HR HU IE IS IT LI LT LU LV MC ME MK MT NL**
     **NO PL PT RO RS SE SI SK SM TR**
     Designated Extension States:
     **BA**
     Designated Validation States:
     **GE KH LA MA MD TN**

(30) Priority:  **26.12.2024  IN 202421103290**

(71) Applicant: **Tata Consultancy Services Limited**
     **Maharashtra (IN)**

(72) Inventors:
     • **RADHAKRISHNAN, Anilraj**
       **695581 Trivandrum, Kerala (IN)**

     • **SANTHANAM KUPPUSAMY, Sivakumar**
       **600086 Chennai, Tamil Nadu (IN)**
     • **SIVAN, Vishnu**
       **695581 Trivandrum, Kerala (IN)**
     • **KURUP, Aravind Suresh**
       **695581 Trivandrum, Kerala (IN)**
     • **AMEER, Abinshah**
       **695581 Trivandrum, Kerala (IN)**

(74) Representative: **Goddar, Heinz J.**
     **Boehmert & Boehmert**
     **Anwaltspartnerschaft mbB**
     **Pettenkoferstrasse 22**
     **80336 München (DE)**

(54)  **METHOD AND SYSTEM FOR ENHANCING FINE-MOTOR SKILLS BASED ON ADAPTIVE THRESHOLDING**

(57)  This disclosure relates generally to a method and system for enhancing fine-motor skills based on adaptive thresholding. The disclosure relates to an assistive system to improve the fine motor skills of specially abled children through a gamified format. The conventional methods are repetitive and disengaging, which use rule-based threshold changes which do not help in developing fine-motor skills. The disclosed system uses rotational and translational movements detected via accelerometer and gyroscope sensors comprised in a wearable device and applies adaptive thresholding to perform various actions in a first-person controller (FPC) game environment. The disclosed method uses dynamic thresholding concept for adjusting maximum and minimum sensor readings. The method computes threshold values which are computed based on previous readings and predicted user improvement values from a regression model. The disclosed method is used for improving the fine-motor skills of specially abled children who struggle with daily activities and personal independence.

FIG. 4

**Description**

CROSS-REFERENCE TO RELATED APPLICATIONS AND PRIORITY

The present application claims priority to Indian application no. 202421103290, filed on December 26, 2024.

TECHNICAL FIELD

The disclosure herein generally relates to enhancing fine motor skills, and, more particularly, to a method and system for enhancing fine-motor skills based on adaptive thresholding.

BACKGROUND

Fine motor skills are small, precise movements which are made using hands, feet, fingers and toes. Children need good fine motor skills for carrying out activities like playing with toys, using pen to write, throwing ball and so on. Coordination difficulties and weaknesses can make fine motor skills challenging to specially abled children. Specially abled children often struggle with fine motor activities that are critical for daily functions and personal independence. Assistive technology and adaptive equipment help these children to develop or improve the fine motor skill activities. Traditional methods of improving fine motor skills can be repetitive and disengaging. Few methods provide rule based adaptive difficulty system that changes thresholds for range of motion and speed based on past performance. However, rule-based threshold changes, more like static approaches, do not help as the range for development of fine motor skills will vary from person to person.

SUMMARY

Embodiments of the present disclosure present technological improvements as solutions to one or more of the above-mentioned technical problems recognized by the inventors in conventional systems. For example, in one embodiment, a method for enhancing fine-motor skills based on adaptive thresholding is provided. The method includes receiving in real time at each time instant sensor data from a plurality of sensors comprised in a wearable device worn by a user. The wearable device is connected to the fine-motor skill enhancement gaming system, and the sensor data comprising a rotational data is captured from a gyroscope sensor amongst the plurality of sensors and a translational data captured from an accelerometer sensor amongst the plurality of sensors. Further the method includes mapping the sensor data to at least one action amongst a set of actions based on (i) a set of thresholds comprising a rotational threshold and a translational threshold, and (ii) a set of delta values comprising a rotational delta value, and a translational delta value. Furthermore, the method includes normalizing the sensor data to obtain a normalized sensor data. Then the method includes determining a user movement from a set of user movements associated with the at least one action using a movement decision function. Further the method includes marking the at least one action as one of (i) a success, or (ii) a failure based on a comparison between the user movement and the set of thresholds. Finally, the method includes applying the user movement for the user to play the game (i) directly if the at least one action is marked as success, or (ii) after dynamically updating the set of thresholds based on a set of learning rates, an attempt count, and a regression model, if the at least one action is marked as failure.

In another aspect, a system for enhancing fine-motor skills based on adaptive thresholding is provided. The system comprises memory storing instructions; one or more communication interfaces; and one or more hardware processors coupled to the memory via the one or more communication interfaces, wherein the one or more hardware processors are configured by the instructions to receive in real time at each time instant sensor data from a plurality of sensors comprised in a wearable device worn by a user. The wearable device is connected to the fine-motor skill enhancement gaming system, and the sensor data comprising a rotational data is captured from a gyroscope sensor amongst the plurality of sensors and a translational data captured from an accelerometer sensor amongst the plurality of sensors. Further the system includes mapping the plurality of sensor data to at least one action amongst a set of actions based on (i) a set of thresholds comprising a rotational threshold and a translational threshold, and (ii) a set of delta values comprising a rotational delta value, and a translational delta value. Furthermore, the system includes normalizing the sensor data to obtain a normalized sensor data. Then the system includes determining a user movement from a set of user movements associated with the at least one action using a movement decision function. Further the system includes marking the at least one action as one of (i) a success, or (ii) a failure based on a comparison between the user movement and the set of thresholds. Finally the system includes applying the user movement for the user to play the game (i) directly if the at least one action is marked as success, or (ii) after dynamically updating the set of thresholds based on a set of learning rates, an attempt count, and a regression model, if the at least one action is marked as failure.

The step of receiving the sensor data is preceded by initializing (i) the set of thresholds to a pre-defined value, and (ii) the attempt count to zero, and wherein the attempt count is an integer value indicating the number of times the user failed to perform the set of actions. The movement decision function depends on (i) the set of thresholds and (ii) the set of delta values.

The set of thresholds are dynamically updated at a current time instant by incrementing the attempt count by a value of one. Further the set of thresholds are computed based on the set of delta values, and the set of learning rates updated at a previous time instant. Then the set of learning rates are updated at a current time instant based on the attempt count, and a predicted user improvement at the previous time instant using the regression model. Finally a user improvement is predicted at the current time instant using the regression model based on a set of regression coefficients, and the sensor data.

A set of steps are performed at a first-time instant if the at least one action is marked as failure. The set of steps includes applying the user movement for the user to play the game. Then the attempt count is incremented by a value of one. Finally, the set of learning rates are initialized by a value of one.

In yet another aspect, there are provided one or more non-transitory machine-readable information storage media comprising one or more instructions which when executed by one or more hardware processors cause enhancing fine-motor skills based on adaptive thresholding by receiving in real time at each time instant sensor data from a plurality of sensors comprised in a wearable device worn by a user. The wearable device is connected to the fine-motor skill enhancement gaming system, and the sensor data comprising a rotational data is captured from a gyroscope sensor amongst the plurality of sensors and a translational data captured from an accelerometer sensor amongst the plurality of sensors. Further the instructions which when executed by the one or more hardware processors cause mapping the sensor data to at least one action amongst a set of actions based on (i) a set of thresholds comprising a rotational threshold and a translational threshold, and (ii) a set of delta values comprising a rotational delta value, and a translational delta value. Furthermore, the instructions which when executed by the one or more hardware processors cause normalizing the sensor data to obtain a normalized sensor data. Then the computer readable program includes determining a user movement from a set of user movements associated with the at least one action using a movement decision function. Further the instructions which when executed by the one or more hardware processors cause marking the at least one action as one of (i) a success, or (ii) a failure based on a comparison between the user movement and the set of thresholds. Finally the computer readable program includes applying the user movement for the user to play the game (i) directly if the at least one action is marked as success, or (ii) after dynamically updating the set of thresholds based on a set of learning rates, an attempt count, and a regression model, if the at least one action is marked as failure.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a fine-motor skill enhancement gaming system for enhancing fine-motor skills based on adaptive thresholding according to some embodiments of the present disclosure.
FIG. 2 illustrates a wearable device connected to the fine-motor skill enhancement gaming system according to some embodiments of the present disclosure.
FIG. 3A and FIG.3B, collectively referred as FIG.3, is an exemplary flow diagram illustrating a method for enhancing fine-motor skills based on adaptive thresholding in accordance with some embodiments of the present disclosure.
FIG. 4 illustrates an alternative representation of the flow diagram of FIG. 3, in accordance with some embodiments of the present disclosure.
FIG.5A, FIG.5B, and FIG.5C illustrates an example of a forward movement, a backward movement and a jump movement respectively, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Specially abled children often struggle with fine motor activities that are critical for daily functions and personal independence. Traditional methods for improving fine-motor skills can be repetitive and disengaging. There is a need for a system that merges therapy with entertainment to encourage sustained engagement. The method and system disclosed provides a gamified environment where specially abled children develop their motor skills through an immersive and adaptive system. The present disclosure relates to an assistive system designed to improve the fine motor skills of specially abled children through a gamified format. The system uses rotational and translational movements detected via accelerometer and gyroscope sensors and applies adaptive thresholding to perform various actions in a first-person controller (FPC) game environment. It serves as both an entertainment and physiotherapy aid for users.

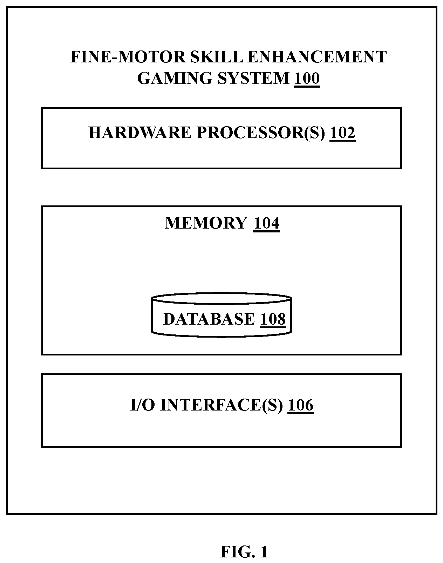

Referring now to the drawings, and more particularly to FIG. 1 through FIG. 5C, where similar reference characters denote corresponding features consistently throughout the figures, there are shown preferred embodiments and these embodiments are described in the context of the following exemplary system and/or method.

FIG. 1 illustrates an exemplary block diagram of a fine-motor skill enhancement gaming system for enhancing fine-motor skills based on adaptive thresholding according to some embodiments of the present disclosure. In an embodiment, the fine-motor skill enhancement gaming system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules, such as data collection module, normalization module, regression model (not shown), and the like. Further, the plurality of modules includes programs or coded instructions that supplement applications or functions performed by the fine-motor skill enhancement gaming system 100 for executing different steps involved in the process for enhancing fine-motor skills of specially abled children by the fine-motor skill enhancement gaming system 100. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the fine-motor skill enhancement gaming system 100 and coupled via the I/O interface 106. The database may include data sources corresponding to sensor data received from the wearable device, a set of actions, and so on.

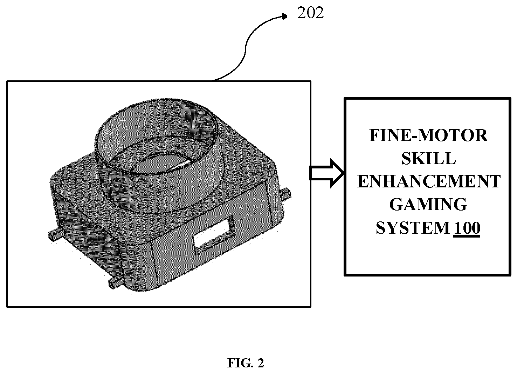

FIG. 2 illustrates a wearable device 202 connected to the fine-motor skill enhancement gaming system 100 according to some embodiments of the present disclosure. The present disclosure uses the wearable device 202, designed in the form of a watch or wristband and the like, that can be worn on various parts of the arm such as hand, wrist, elbow, etc. The wearable device 202 includes a plurality of sensors such as an accelerometer sensor and a gyroscope sensor that captures rotational and translational movements of the user's hand. The hardware component is homegrown and includes the sensor-driven watch that communicates with the gaming software in the fine-motor skill enhancement gaming system 100. The flexibility to wear the wearable device on different parts of the arm allows for customizable movement mapping. The wearable device 202 is connected to the fine-motor skill enhancement gaming system 100. The wearable device is connected through wi-fi using Message Queuing Telemetry Transport (MQTT) protocol. The system is integrated inside the wearable device. We are using an MQTT broker running in the software side or game side and act as a server for collecting the sensor data.

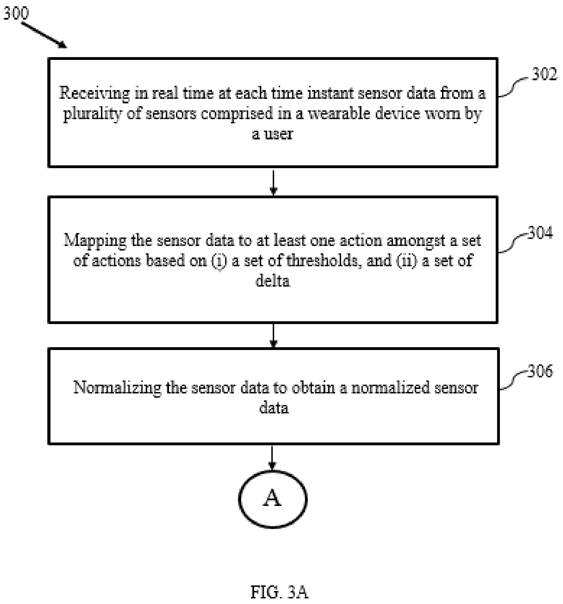

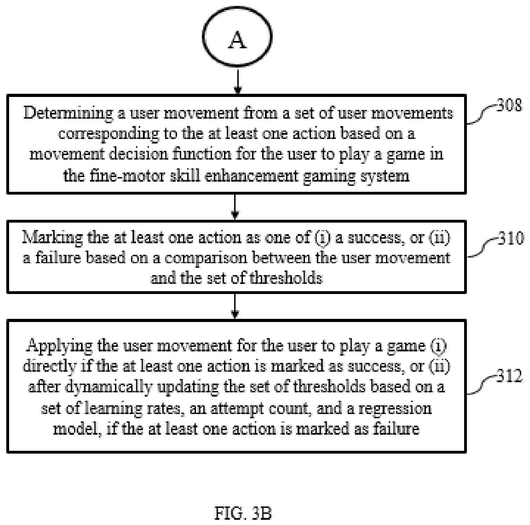

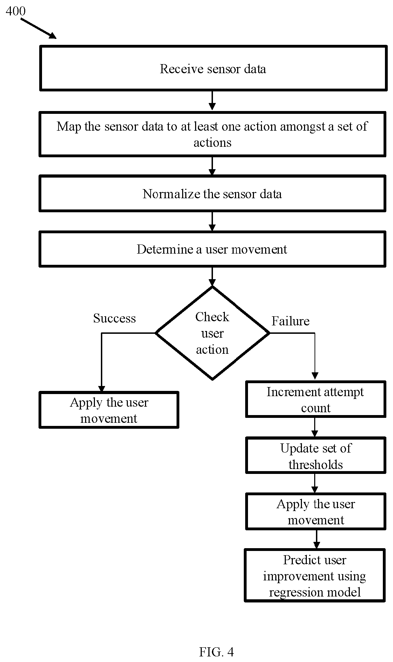

FIG. 3A and FIG.3B, collectively referred as FIG.3, is an exemplary flow diagram illustrating a method for enhancing fine-motor skills based on adaptive thresholding in accordance with some embodiments of the present disclosure. FIG. 4 illustrates an alternative representation of the flow diagram of FIG. 3, in accordance with some embodiments of the present disclosure. In an embodiment, the fine-motor skill enhancement gaming system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the fine-motor skill enhancement gaming system 100 as depicted in FIG. 1 and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

Now referring to FIG. 3A, at step 302 of the method 300, one or more hardware processors 102 are configured to receive using a data collection module, in real time sensor data from the plurality of sensors comprised in the wearable device 200 worn by the user. The sensor data is received at each time instant in real time using the data collection module. The difference between each time instant is set to a pre-defined time interval, for example, 200 milliseconds (ms). This is because of sensor limitation. It requires around 100ms for providing acceleration and gyroscope values. The wearable device 202 is connected to the fine-motor skill enhancement gaming system 100. The sensor data includes rotational data captured from the gyroscope sensor and a translational data captured from the accelerometer sensor. The accelerometer sensor is a 3-axis accelerometer to capture the translational data, with a sensitivity of $\pm 2$ gravity (g) or $\pm 4$g or $\pm 8$g or $\pm 16$g. The gyroscope sensor is a 3-axis gyroscope to capture the rotational data, with a sensitivity of $\pm 250$ or $\pm 500$ or 1000 or $\pm 2000$ degree per second (dps). The gyroscope sensor captures the rotational data of rotational movements by the user along three axes ($\theta_x, \theta_y, \theta_z$), and the accelerometer captures translational movements by the user along three axes ($a_x, a_y, a_z$). The wearable device 202 also includes a low-power microcontroller for data acquisition and communication with the fine-motor skill enhancement gaming system 100. It also employs wireless communication for real time transmission to the fine-motor skill enhancement gaming system 100. The wearable device 202 is configured to capture the sensor data, wherein the sensor data is initialized and brought within a pre-defined range of values. Further an error handling technique is performed for removing the outliers if the sensor data is not in the pre-defined range of values.

At step 304 of the method 300, the one or more hardware processors 102 are configured to map the sensor data to at least one action amongst a set of actions. The mapping is done based on a set of thresholds and a set of delta values. The set of thresholds includes a rotational threshold, and a translational threshold associated with the rotational data and the translational data respectively. The set of delta values includes a rotational delta value, and a translational delta value associated with the rotational data and the translational data respectively. Before the step of receiving the sensor data a set of thresholds and an attempt count is initialized. The set of thresholds is initialized to a pre-defined value and the attempt count is initialized to zero. The attempt count indicates the number of times the user failed to perform the set of actions. The set of actions includes a forward action, a backward action and a jump action. The forward action indicates rotating the hand right which means the user moves forward. The backward action indicates rotating the hand left which means the user moves backward. The jump action indicates raising the hand which means the user performs a jump action. The forward action is represented as follows,

$$if \ \theta_x > T_{gyro} + \Delta\theta_x \ and \ a_x > T_{accel} + \Delta a_x \qquad (1)$$

The backward action is represented as follows,

$$if \ \theta_x > T_{gyro} + \Delta\theta_x \ and \ a_x < T_{accel} - \Delta a_x \qquad (2)$$

The jump action is represented as follows,

$$if \ \theta_y > T_{gyro} + \Delta\theta_y \ and \ a_y < T_{accel} + \Delta a_y \qquad (3)$$

$T_{gyro}$ is the rotational threshold i.e., the threshold for the rotational movement data (initially set to a nominal value, e.g. $T_{gyro}$ = 20°/ second), $T_{accel}$ is the translational threshold, i.e., the threshold for the translational movement data (initially set to a nominal value, e.g. $T_{accel}$ = 5 m / second$^2$), $\Delta\theta$ and $\Delta a$ are the set of delta values that dynamically adjust the rotational threshold and the translational threshold based on user performance history, which is explained later. These set of delta values ensures personalized calibration for different users.

Further, at step 306 of the method 300, the one or more hardware processors 102 are configured to normalize the sensor data to obtain a normalized sensor data using a normalization module. In the normalization module, the accelerometer sensor readings ($a_x$, $a_y$, $a_z$) are normalized as:

$$a_{norm} = \sqrt{a_x{}^2 + a_y{}^2 + a_z{}^2} \qquad (4)$$

This ensures that different users with varying ranges of motion can have the system adapt to their abilities, normalizing the sensor data for consistent performance metrics.

At step 308 of the method 300, the one or more hardware processors 102 are configured to determine a user movement from a set of user movements corresponding to the at least one action. The user movement is determined based on a movement decision function for the user to play a game in the fine-motor skill enhancement gaming system 100. The movement decision function depends on (i) the set of thresholds and (ii) the set of delta values. The movement decision function is defined as follows in terms of the set of threshold and the set of delta values,

$$(a, \theta) = \begin{cases} Forward & if\ \theta_x > T_{gyro} + \Delta\theta_x\ and\ a_x > T_{accel} + \Delta a_x \\ Backward & if\ \theta_x > T_{gyro} + \Delta\theta_x\ and\ a_x < T_{accel} - \Delta a_x \\ Jump & if\ \theta_y > T_{gyro} + \Delta\theta_y\ and\ a_y < T_{accel} + \Delta a_y \end{cases} (5)$$

This function determines which action is executed based on the sensor readings and the set of thresholds.

Again, at step 310 of the method 300, the one or more hardware processors 102 are configured to mark the at least one action as one of (i) a success, or (ii) a failure. The action is marked as success or failure based on a comparison between the user movement and the set of thresholds. If the user achieves values of θ (the rotational data along the three axes ($\theta_x$, $\theta_y$, $\theta_z$) together) and greater than the thresholds $T_{gyro}$ and $T_{accel}$, the action is marked as success; otherwise, it is marked as failure.

At step 312 of the method 300, the one or more hardware processors 102 are configured to apply the user movement (i) directly if the at least one action is marked as success, or (ii) after dynamically updating the set of thresholds if the at least one action is marked as failure. Here the set of thresholds are dynamically updated based on a set of learning rates, an attempt count, and a regression model. If the action is marked as success, the user movement, i.e., either the forward movement, the backward movement or the jump movement, is directly applied for the user to play the game in the fine-motor skill enhancement gaming system 100.

However, at a current time instant if the action is marked as failure, the set of thresholds are dynamically updated. At a first-time instant, if the action is marked as failure, a set of steps as provided below is performed. Initially, the user movement is applied for the user to play the game. The attempt count is incremented by a value of one, as the attempt count indicates how many times the user failed to perform the set of actions. Further at the first-time instant, a set of learning rates ($\alpha$ and $\beta$) which are used for dynamically updating of the set of thresholds is initialized by a value of one. No threshold adjustments occur in the first-time instant since the set of thresholds are zero. At the current time instant if the action is marked as failure, the set of thresholds are dynamically updated using the attempt count and the regression model. The dynamic updation of the set of thresholds in the current time instant is provided as below. Initially, the attempt count is incremented by one. Further, the set of thresholds are computed based on the set of delta values (here simplify by setting the set of delta values at 0.1), and the set of learning rates which are updated at a previous time instant. The set of thresholds $T_{gyro}$ and $T_{accel}$ are not static but adapt to the user's progress. As the user improves, the set of thresholds are recalculated using the delta values Δθ and Δa, and is given as,

$$T_{gyro} = T_{gyro} + \alpha . \Delta\theta \qquad (6)$$

$$T_{accel} = T_{accel} + \beta . \Delta a \qquad (7)$$

$\alpha$ and $\beta$ are the set of learning rates that control how quickly the fine-motor skill enhancement gaming system adjusts based on user feedback. The $\alpha$ and $\beta$ depends on the attempt count and the regression model results. Each failure attempt is counted as 1. The regression model is responsible for providing predictive improvement over time. To avoid too drastic changes as the user gets better, the set of learning rates decreases as the user improves. The set of learning rates is represented as below,

$$\alpha = \frac{1}{attempt\_count} . (1 - I(t)) \qquad (8)$$

$$\beta = \frac{1}{attempt\_count} \cdot (1 - I(t)) \tag{9}$$

where $I(t)$ is the user improvement predicted at the previous time instant. At first instant, the regression model outputs zero because the set of learning rates $\alpha$ and $\beta$ are initially set to zero, and the error rate is ignored. Further at the current time instant, a user improvement is predicted using the regression model based on a set of regression coefficients, and the normalized sensor data. The predicted user improvement is represented as follows,

$$I(t) = \beta_0 + \beta_1 \cdot S_{norm}(t) + \in \tag{10}$$

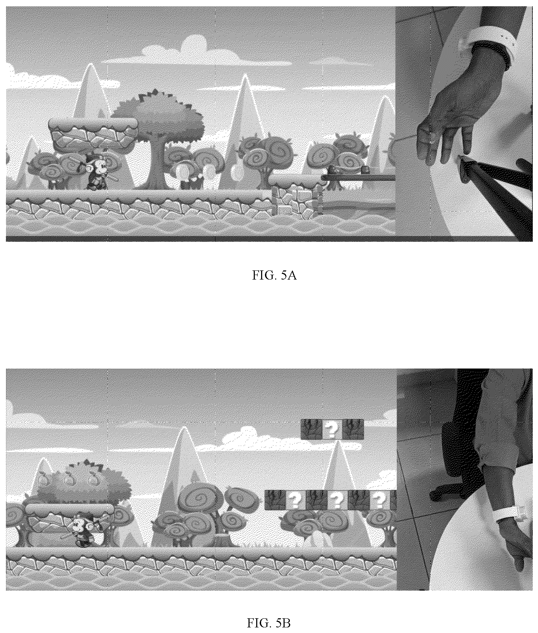

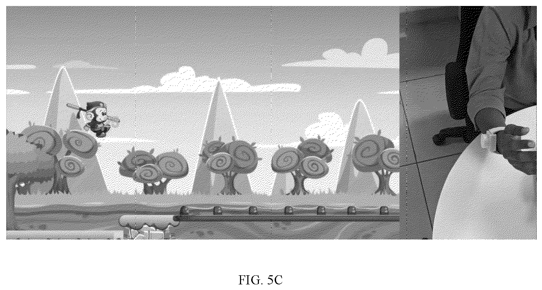

where $I(t)$ is the predicted user improvement at the current time instant (t), $S_{norm}(t)$ is the normalized sensor data at the current time instant (t), $\beta_0$, $\beta_1$ are set of regression coefficients, and $\in$ is the error term. This dynamic or adaptive thresholding is a concept designed for improving the smoothness of the game and enhancing the fine motor activities of the user by performing the actions. There are scenarios where normal games or activities defined with fixed threshold values might not be suitable for various users with various capabilities. Also, some fixed threshold values might be difficult to achieve for various users with various capabilities. Changing the threshold every time manually is not practically feasible. The present disclosure tackles these challenges using the dynamic or adaptive thresholding concept. The dynamic thresholding concept is based on the user attempt count and the current sensor readings. Here the system will create a regression model to identify the appropriate threshold value for the user. EXPERIMENTAL RESULTS: The responsiveness and user experience of three games mapped to user hand movements were tested and evaluated each with unique controls and thresholds for movement-based actions. FIG.5A, FIG.5B, and FIG.5C illustrate an example of the forward movement, the backward movement and the jump movement respectively, in accordance with some embodiments of the present disclosure. The games and the mapped actions were

(i) Rapid hero:

    a) Backward movement: Triggered by the user rotating hands to his/her left side
    b) Forward movement: Triggered by the user rotating their hands to his/her right side.
    c) Jump action: Triggered when the user raises his/her hands.

(ii) Stack Ball:

    a) Hit action: When the user raises his/her hand, the ball hits and breaks a block.

(iii) Helix jump:

    a) Backward movement: Triggered by the user rotating hands to the left side.
    b) Forward movement: Triggered by the user rotating hands to the right side.

Each game was tested over 50 times with a diverse group of users. Movements were tracked and mapped to the corresponding game actions. Threshold values for movement actions were set initially and then dynamically adjusted based on user feedback. There was a noticeable initial delay in syncing gameplay with user movements. This delay affected the immediate user experience, particularly in the first few trials. Actions can be flexibly mapped to various values, with most actions associated with a threshold. This threshold acts as a boundary to trigger the action. Initial threshold values had a significant impact on user experience. Users required a few trials to get accustomed to these thresholds, and some actions felt unresponsive or overly sensitive on first attempts. Adjusting thresholds dynamically in response to individual user movements significantly improved user satisfaction. With dynamic thresholding, actions felt more responsive and accurate, enhancing overall gameplay enjoyment and reducing user frustration.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein provides a gamified rehabilitation system designed to improve fine motor skills in specially-abled children through interactive gameplay. It uses a homegrown wearable device, equipped with accelerometers and gyroscopes sensors, that captures hand movements and translates them into real-time actions within a First-Person Controller (FPC) game environment. The present disclosure incorporates the concept of adaptive thresholding, based on attempt count, the sensor data at a current time instant and a regression model for identifying the appropriate threshold values for the user. This makes the fine motor skill enhancement system adapt to the user's skill level and performance.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) comprising:

receiving in real time at each time instant, via one or more hardware processors, sensor data from a plurality of sensors deployed in a wearable device worn by a user, wherein the wearable device is connected to the fine-motor skill enhancement gaming system, and wherein the sensor data comprising a rotational data captured from a gyroscope sensor amongst the plurality of sensors and a translational data captured from an accelerometer sensor amongst the plurality of sensors (302);
mapping, via the one or more hardware processors, the sensor data to at least one action amongst a set of actions based on (i) a set of thresholds comprising a rotational threshold and a translational threshold, and (ii) a set of delta values comprising a rotational delta value, and a translational delta value (304);
normalizing, via the one or more hardware processors, the sensor data to obtain a normalized sensor data (306);
determining, via the one or more hardware processors, a user movement from a set of user movements associated with the at least one action using a movement decision function (308);

marking, via the one or more hardware processors, the at least one action as one of (i) a success, or (ii) a failure based on a comparison between the user movement and the set of thresholds (310); and

applying, via the one or more hardware processors, the user movement for the user to play a game (i) directly if the at least one action is marked as success, or (ii) after dynamically updating the set of thresholds based on a set of learning rates, an attempt count, and a regression model, if the at least one action is marked as failure (312).

2. The processor implemented method as claimed in claim 1, wherein the step of receiving the sensor data is preceded by initializing (i) the set of thresholds to a pre-defined value, and (ii) the attempt count to zero, and wherein the attempt count is an integer value indicating the number of times the user failed to perform the set of actions.

3. The processor implemented method as claimed in claim 1, wherein the movement decision function depends on (i) the set of thresholds and (ii) the set of delta values.

4. The processor implemented method as claimed in claim 1, wherein dynamically updating the set of thresholds at a current time instant comprises:

incrementing, via the one or more hardware processors, the attempt count by a value of one;

computing, via the one or more hardware processors, the set of thresholds based on the set of delta values, and the set of learning rates updated at a previous time instant;

updating, via the one or more hardware processors, the set of learning rates at a current time instant based on the attempt count, and a predicted user improvement at the previous time instant using the regression model; and

predicting, via the one or more hardware processors, a user improvement at the current time instant using the regression model based on a set of regression coefficients, and the normalized sensor data.

5. The processor implemented method as claimed in claim 1, wherein if the at least one action is marked as failure, then a set of steps is performed at a first-time instant, wherein the set of steps comprises:

applying, via the one or more hardware processors, the user movement for the user to play the game;

incrementing, via the one or more hardware processors, the attempt count by a value of one; and

initializing, via the one or more hardware processors, the set of learning rates by a value of one.

6. A fine-motor skill enhancement gaming system (100), comprising:

a memory (104) storing instructions;

one or more communication interfaces (106); and

one or more hardware processors (102) coupled to the memory (104) via the one or more communication interfaces (106), wherein the one or more hardware processors (102) are configured by the instructions to:

receive in real time at each time instant sensor data from a plurality of sensors deployed in a wearable device worn by a user, wherein the wearable device is connected to the fine-motor skill enhancement gaming system, and wherein the sensor data comprising a rotational data captured from a gyroscope sensor amongst the plurality of sensors and a translational data captured from an accelerometer sensor amongst the plurality of sensors;

map the sensor data to at least one action amongst a set of actions based on (i) a set of thresholds comprising a rotational threshold and a translational threshold, and (ii) a set of delta values comprising a rotational delta value, and a translational delta value;

normalize the sensor data to obtain a normalized sensor data;

determine a user movement from a set of user movements associated with the at least one action using a movement decision function;

mark the at least one action as one of (i) a success, or (ii) a failure based on a comparison between the user movement and the set of thresholds; and

apply the user movement for the user to play a game (i) directly if the at least one action is marked as success, or (ii) after dynamically updating the set of thresholds based on a set of learning rates, an attempt count, and a regression model, if the at least one action is marked as failure.

7. The fine-motor skill enhancement gaming system as claimed in claim 6, wherein the step of receiving the sensor data is preceded by initializing (i) the set of thresholds to a pre-defined value, and (ii) the attempt count to zero, and wherein the attempt count is an integer value indicating the number of times the user failed to perform the set of actions.

8. The fine-motor skill enhancement gaming system as claimed in claim 6, wherein the movement decision function depends on (i) the set of thresholds and (ii) the set of delta values.

9. The fine-motor skill enhancement gaming system as claimed in claim 6, wherein dynamically updating the set of thresholds at a current time instant comprises:

    increment the attempt count by a value of one;
    compute the set of thresholds based on the set of delta values, and the set of learning rates updated at a previous time instant;
    update the set of learning rates at a current time instant based on the attempt count, and a predicted user improvement at the previous time instant using the regression model; and
    predict a user improvement at the current time instant using the regression model based on a set of regression coefficients, and the normalized sensor data.

10. The fine-motor skill enhancement gaming system as claimed in claim 6, wherein if the at least one action is marked as failure, then a set of steps is performed at a first-time instant, wherein the set of steps comprises:

    apply the user movement for the user to play the game;
    increment the attempt count by a value of one; and
    initialize the set of learning rates by a value of one.

11. One or more non-transitory machine-readable information storage mediums comprising one or more instructions which when executed by one or more hardware processors cause:

    receiving in real time at each time instant, sensor data from a plurality of sensors deployed in a wearable device worn by a user, wherein the wearable device is connected to the fine-motor skill enhancement gaming system, and wherein the sensor data further comprising a rotational data captured from a gyroscope sensor amongst the plurality of sensors and a translational data captured from an accelerometer sensor amongst the plurality of sensors;
    mapping the sensor data to at least one action amongst a set of actions based on (i) a set of thresholds further comprising a rotational threshold and a translational threshold, and (ii) a set of delta values comprising a rotational delta value, and a translational delta value;
    normalizing the sensor data to obtain a normalized sensor data;
    determining a user movement from a set of user movements associated with the at least one action using a movement decision function;
    marking the at least one action as one of (i) a success, or (ii) a failure based on a comparison between the user movement and the set of thresholds; and
    applying the user movement for the user to play a game (i) directly if the at least one action is marked as success, or (ii) after dynamically updating the set of thresholds based on a set of learning rates, an attempt count, and a regression model, if the at least one action is marked as failure.

12. The one or more non-transitory machine-readable information storage mediums as claimed in claim 11, wherein the step of receiving the sensor data is preceded by initializing (i) the set of thresholds to a pre-defined value, and (ii) the attempt count to zero, and wherein the attempt count is an integer value indicating the number of times the user failed to perform the set of actions.

13. The one or more non-transitory machine-readable information storage mediums as claimed in claim 11, wherein the movement decision function depends on (i) the set of thresholds and (ii) the set of delta values.

14. The one or more non-transitory machine-readable information storage mediums as claimed in claim 11, wherein dynamically updating the set of thresholds at a current time instant comprises:

    incrementing the attempt count by a value of one;
    computing the set of thresholds based on the set of delta values, and the set of learning rates updated at a previous time instant;
    updating the set of learning rates at a current time instant based on the attempt count, and a predicted user improvement at the previous time instant using the regression model; and
predicting a user improvement at the current time instant using the regression model based on a set of regression coefficients, and the normalized sensor data.

15. The one or more non-transitory machine-readable information storage mediums as claimed in claim 11, wherein if the at least one action is marked as failure, then a set of steps is performed at a first-time instant, wherein the set of steps comprises:

applying the user movement for the user to play the game;
incrementing the attempt count by a value of one; and
initializing the set of learning rates by a value of one.

**FINE-MOTOR SKILL ENHANCEMENT GAMING SYSTEM 100**

**HARDWARE PROCESSOR(S) 102**

**MEMORY 104**

**DATABASE 108**

**I/O INTERFACE(S) 106**

**FIG. 1**

202

FINE-MOTOR SKILL ENHANCEMENT GAMING SYSTEM **100**

FIG. 2

300

Receiving in real time at each time instant sensor data from a plurality of sensors comprised in a wearable device worn by a user — 302

Mapping the sensor data to at least one action amongst a set of actions based on (i) a set of thresholds, and (ii) a set of delta — 304

Normalizing the sensor data to obtain a normalized sensor data — 306

A

FIG. 3A

A

Determining a user movement from a set of user movements corresponding to the at least one action based on a movement decision function for the user to play a game in the fine-motor skill enhancement gaming system — 308

Marking the at least one action as one of (i) a success, or (ii) a failure based on a comparison between the user movement and the set of thresholds — 310

Applying the user movement for the user to play a game (i) directly if the at least one action is marked as success, or (ii) after dynamically updating the set of thresholds based on a set of learning rates, an attempt count, and a regression model, if the at least one action is marked as failure — 312

FIG. 3B

400

```
┌─────────────────────────────────────────┐
│          Receive sensor data            │
└─────────────────────────────────────────┘
                    │
                    ▼
┌─────────────────────────────────────────┐
│ Map the sensor data to at least one     │
│ action amongst a set of actions         │
└─────────────────────────────────────────┘
                    │
                    ▼
┌─────────────────────────────────────────┐
│         Normalize the sensor data       │
└─────────────────────────────────────────┘
                    │
                    ▼
┌─────────────────────────────────────────┐
│        Determine a user movement        │
└─────────────────────────────────────────┘
```

Success ◄─── Check user action ───► Failure

| Apply the user movement |

| Increment attempt count |

| Update set of thresholds |

| Apply the user movement |

| Predict user improvement using regression model |

FIG. 4

FIG. 5A

FIG. 5B

FIG. 5C

Europäisches
Patentamt

European
Patent Office

Office européen
des brevets

# EUROPEAN SEARCH REPORT

Application Number

EP 25 20 3036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0052106 A (NAT UNIV PUSAN IND UNIV COOP FOUND [KR]) 14 May 2020 (2020-05-14) | 1-3,6-8, 11-13 | INV. A63F13/211 A63F13/67 A63F13/212 A63F13/428 |
| A | * abstract * <br> * paragraph [0001] * <br> * paragraph [0014] * <br> * paragraph [0058] * <br> * paragraph [0066] - paragraph [0069] * <br> * paragraph [0071] - paragraph [0078] * <br> * paragraph [0097] * <br> * paragraph [0106] * <br> * paragraph [0088] - paragraph [0090] * <br> * paragraph [0171] * <br> * paragraph [0182] - paragraph [0186] * <br> ----- | 4,5,9, 10,14,15 | |
| X | US 2021/146241 A1 (BLEASDALE-SHEPHERD IESTYN [US] ET AL) 20 May 2021 (2021-05-20) | 1,6,11 | |
| A | * paragraph [0001] - paragraph [0002] * <br> * paragraph [0011] - paragraph [0013] * <br> * paragraph [0037] - paragraph [0038] * <br> * paragraph [0052] - paragraph [0053] * <br> * paragraph [0063] * <br> * paragraph [0078] - paragraph [0079] * <br> ----- | 2-5, 7-10, 12-15 | |
| X | US 2018/345128 A1 (AHMED JIBRAN [CA] ET AL) 6 December 2018 (2018-12-06) | 1,6,11 | |
| A | * paragraph [0020] * <br> * paragraph [0022] * <br> * paragraph [0057] - paragraph [0059] * <br> * paragraph [0061] * <br> * paragraph [0081] - paragraph [0082] * <br> * paragraph [0120] * <br> ----- | 2-5, 7-10, 12-15 | |

TECHNICAL FIELDS
SEARCHED      (IPC)

A63F
G06F

The present search report has been drawn up for all claims

| Place of search | Date of completion of the search | Examiner |
|---|---|---|
| Munich | 11 February 2026 | Garton, Paul |

EPO FORM 1503 03.82 (P04C01)

## ANNEX TO THE EUROPEAN SEARCH REPORT
## ON EUROPEAN PATENT APPLICATION NO.

EP 25 20 3036

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | | Publication date |
|---|---|---|---|---|
| KR 20200052106 A | 14-05-2020 | NONE | | |
| US 2021146241 A1 | 20-05-2021 | CN | 114730391 A | 08-07-2022 |
| | | EP | 4042342 A1 | 17-08-2022 |
| | | JP | 7596379 B2 | 09-12-2024 |
| | | JP | 2023502243 A | 23-01-2023 |
| | | KR | 20220097907 A | 08-07-2022 |
| | | US | 2021146241 A1 | 20-05-2021 |
| | | WO | 2021101811 A1 | 27-05-2021 |
| US 2018345128 A1 | 06-12-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421103290